# EUROPEAN PATENT APPLICATION

(11) **EP 1 541 936 A1**
(43) Date of publication of application: **15.06.2005**
(21) Application number: 03760546.6
(22) Date of filing: 23.06.2003
(51) Int. Cl.: F24J 2/32

(54) **HANGING GLASS VACUUM TUBE TYPE SOLAR HEAT COLLECTOR**

(30) Priority: 24.06.2002 CN 02112207
(71) Applicant: Pan, Ge, Shanghai 200030 (CN)
(72) Inventor: Pan, Ge, Shanghai 200030 (CN)
(74) Representative: Grosse, Rainer
(86) International application number: PCT/CN2003/000482
(87) International publication number: WO 2004/001302

(57) **Abstract**

The invention relates to a hanging transparent glass vacuum tube type solar heat collecting unit, including heat collecting tube plate, transparent glass tubes and seal cover, characterized in that further comprising multiple fins disposed along the axial direction of the glass tubes, wherein, said fins comprise a base plate and a faceplate coupled thereto. The fin plates are coupled to the heat collecting tube plate plane through the base plate, and are arranged at an angle with the heat collecting tube plate. Since several parallel radiation absorption fin plates with a certain angle to the heat collecting tube plate are distributed on the light-absorbing surface of the hanging transparent glass vacuum tube solar heat collector, the absorption ratio is approximately 1 in hanging installment. Only a fine angle adjustment or no angle adjustment to the heat collector is required to enhance the harmoniousness with the buildings and avoid the disadvantages of heat dispersion and heat transfer, which gives a better effect in sunlight energy collection and heat transferring than the prior art.

## Description

### FIELD OF THE INVENTION

The invention relates to a glass vacuum tube type solar heat collecting unit, and more particularly, to a hanging transparent glass vacuum tube type solar heat collecting unit with the angle of its fins adjustable.

### BACKGROUND OF THE INVENTION

Glass vacuum tube type solar heat collector is the most common product in the field of solar heat utilizing, which is used to absorb the direct light and diffuse light from all directions and to transform the sunlight energy into the output of heat energy. The most common application thereof is the solar water heater which combining with water storage tank and other devices.

Since the solar energy is a kind of low-density and changeable energy, which changes according to the different incidence of the sunlight in the four seasons, the acceptable light intensity variation can reach 17% within the incident angle of 0° ~90° . Although the variation has little influence on the light intensity within an incident angle of 45°, which will be less than 10%, however, along with the development of the technology for utilizing solar energy, especially with the development of the selective absorption surface coating approaches, the absorption rate of the heat absorbent surface of the prior glass vacuum tube type solar heat collecting unit of ≥ 0.90 is achieved; at an emission rate of ≤0.10, the loss of energy absorption caused by the incident angle has been contemplated as a great consideration. As the utilization of solar energy tends to be combined with the buildings, it is emphasized that the installation of the facilities utilizing solar energy function as the heat preservation and decoration without influencing the appearance of buildings or causing visual pollution. Therefore, the hanging installation of the heat collector is the only suitable type for such demand, meanwhile, it is necessary to keep high efficiency of heat collection after hanging installation.

The improvement of the transparent glass vacuum tube type heat collecting unit related the prior technology is disclosed in CN2348323, which allows the heat collector to be almost vertically installed through the horizontal placement of the glass vacuum tube.

Meanwhile, it allows the heat-absorbing surface of the heat collecting plate in the glass vacuum tube to incline according to the geographical latitude to be vertical to the incident sunlight. Therefore, increase the absorbed sunlight intensity. The obvious problem caused by the horizontal placement of vacuum tube heat collector is that the sunlight from the reflector of the collector and the energy absorbed from the reflected sunlight of the ground cannot be satisfactory (as it is parallel to the heat absorbing surface). In addition, the heat transfer efficiency is low in the horizontal direction. Besides, the upside of the glass vacuum tube is easy to be polluted by dust and snow accumulated. Another China patent CN2175904 disclosed that several heat absorbing disk-shape fins disposed vertically to the axial direction of the glass vacuum tube, the fins are parallel to each other and set on the heat collecting tube along its axial direction, it allows that when the device is hung vertically, the reflection times of the incident sunlight among the parallel fins increases, thus the sunlight can be absorbed repeatedly and the sunlight intensity absorbed increases. However, from the point of energy absorption, the reflected sunlight from the heat -absorbing surface will escape from the heat collector device after several times reflection between the heat-absorbing surface and the wall of the glass tube. In addition, the sunlight energy parallel to the heat collecting surface can be hardly absorbed using the prior technology. For the second type of vacuum tube heat collecting unit, its disk-shape fins can hardly reach the absorption effect of vertical incident sunlight when the device is hung vertically. Thereby, the loss of sunlight energy absorption occurs.

### SUMMARY OF THE INVENTION

The object of the invention is to provide a transparent glass vacuum tube heat collecting unit, which can be hung vertically. It is almost vertical to the incident sunlight in the direction of the geography latitude angle or of the sum of the geography latitude angle and the solar latitude angle, through the placement of the parallel heat-absorbing fins, which can be distributed on both front side and back side and coupled with a heat collecting tube plate with a certain angle, along the axial of the glass tube. The invention allows an energy absorption ratio of approximately 1 by a multi-reflection array of the parallel faceplate and the base plate, for absorbing the reflected light from the reflector and the ground and preventing the reflected radiation from escaping, meanwhile, reducing the loss of incident energy in all directions, and therefore is a high-efficient transparent glass vacuum tube heat collecting unit.

The invention is accomplished as following. A hanging transparent glass vacuum tube type solar heat collecting unit is used in the invention, which includes heat collecting tube plate, transparent glass tube and seal cover, characterized in that further comprising fin plates disposed along the axial direction of the glass tube, said fin plate comprises a base plate and a faceplate coupled thereto, which are connected to the heat collecting tube plate plane through the base plate, also, the fin plates are arranged with an angle to the heat collecting tube plate plane. The acute angle formed between the fin faceplate and the heat collecting tube plate plane is within 10° ~90°. The connection between the fin faceplate and the fin base plate is in the form of one base plate connected to one or more faceplates. The fin base plate and fin faceplate can be manufactured integrally or separately. The fin faceplate can be connected to the top/bottom end part of the base plate or to other parts of the base plate except the top/bottom end part. The distribution density of the fin plates along the heat collecting tube plate in the vertical direction is within 20~2500/meter. The fixing of the fin base plate with the heat collecting tube plate can be coupled by welding, bonding or pressurizing onto the single front side or both the front-back double sides. The fin plates are preferably disposed horizontally on the heat collecting tube plate plane. The said transparent glass tube is one-end-pass or straight-through single wall transparent glass tube or double wall transparent glass tube, such as vacuum tube. The transparent glass tube can be vacuum tube or be infused with inert gas, such as argon gas, krypton; the glass tube is equipped with a convection block piece, which is made of transparent or non-transparent sheet. The heat collecting tube plate comprises heat collecting tube and heat collecting tube plate, and the tube can be mono-tube such as gravity style heat pipe, or multi-tubes such as fluid contained heat transfer tube. The tubes can be connected to each other.

The advantage of the invention lies in that due to several parallel radiation absorbing fin plates, located on the front/back light absorbing surface of the hanging transparent glass vacuum type solar heat collecting unit, which also maintain a certain angle with the heat collecting tube plate, the energy absorption ratio is nearly 1 when the device is hung vertically. In this way, the toe-out dimension of the installation for the heat collector can be minimized. When using the heat collector, only a fine adjustment or no adjustment of the inclination angle need to be made, so that the sunlight absorbing surface can be vertical to the incident light, or the angle formed between the surface and the incident light keeps below 20 ° as the season changes. It increases the harmoniousness when combined with the buildings and avoids the disadvantages of heat dispersion and heat transfer, which gives a better effect in sunlight energy collection and heat transferring than the prior art.

### BRIEF DESCRIPTION OF THE DRAWINGS

Fig. 1 is a schematic view of the structure of fin plate of the hanging transparent glass vacuum tube type solar heat collecting unit showing how it works when installed vertically.
Fig. 2 is a schematic view of partial structure of a preferred embodiment.
Fig. 3 is a sectional view of the preferred embodiment shown in Fig. 2.
Fig. 4 is a schematic of partial structure of another preferred embodiment of the invention.
Fig. 5 is a sectional view of the embodiment shown in Fig. 4.
Fig. 6 is a schematic view of partial structure of yet another embodiment of the invention.
Fig. 7 is a sectional view of the preferred embodiment shown in Fig. 6.
Fig. 8 is a schematic view of partial structure of still yet another embodiment of the invention.
Fig. 9 is a sectional view of the embodiment shown in Fig. 8. And,
Fig. 10, 11, 12, 13, and 14 are the schematic views of the embodiment fin plate's structure of the hanging transparent glass vacuum tube type solar heat collecting unit.

### DETAILED DESCRIPTION OF THE INVENTION

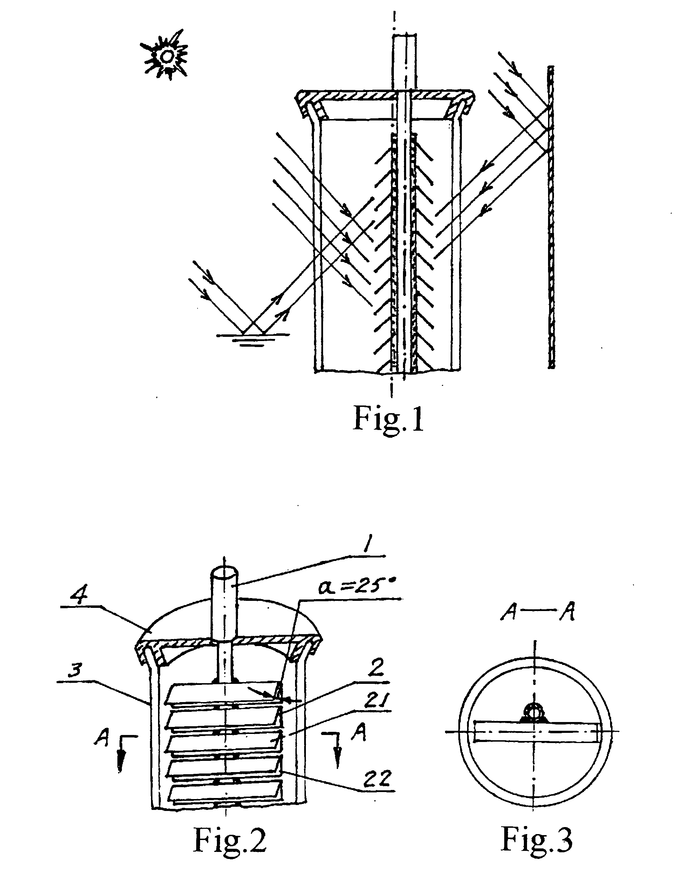

With reference to Fig. 1, an embodiment of hanging transparent glass vacuum tube solar heat collecting unit of the invention includes a heat collecting tube plate 1, fin plates 2, a transparent glass tubes 3, and a seal cover 4. The inner section of the heat collecting tube plate 1 is supported by inner tube glass wall of the transparent glass tube 3; the seal cover 4 functions as a closure after the transparent glass tube 3 is pressed and sealed, and it is fixed to support exterior section of heat collecting tube plate 1.

As shown in Fig. 2, 4, 6 and 8, fin plate 2 includes a faceplate 21 and a base plate 22; the base plate 22 of fin plate 2 is connected with the heat collecting tube plate 1, and the whole faceplate 21 of fin plate 2 forms a separation angle mutually with the plane of the heat collecting tube plate 1; such acute angle generally is within the range of 10 ° ~90°. Moreover, in order to ensure solar radiation reflected by fins plate 2 be fully absorbed, the fins plate 2 along the vertical of heat collecting tube plate 1 i.e. the axis of the glass tube should be no less than 20; based on the experience, the distribution density is within the range of 20~2500 per-meter.

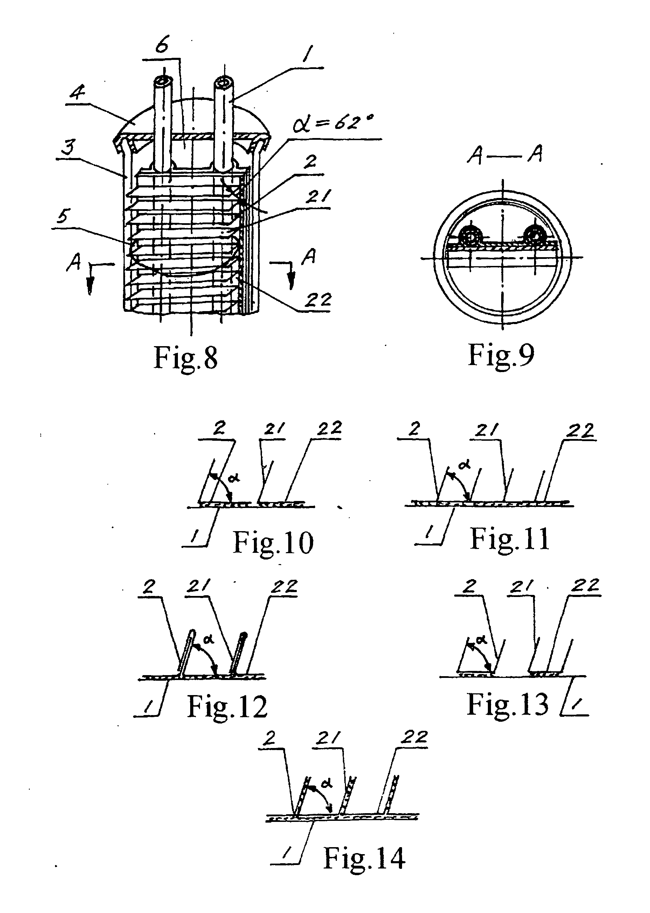

The connection between faceplate 21 of said fins plate 2 and base plate 22, either could be the link of the bottom of faceplate 21 from the top of base plate 22, as shown in the embodiment of Fig. 10; or could be the link of the bottom of faceplate 21 from other parts except the top of base plate, as the embodiment shown in Fig. 11; besides, the faceplate 21 and the base plate 22 could be made as a whole, as shown in the embodiment of Fig. 10 and 13: produced by the sheet-metal flange shaping processing method; or as shown in the embodiment in Fig. 11: made by the precise molding method; or be produced separately as shown in Fig. 14: the two parts on left and right being mid welded after the sheet-metal flange shaping; besides, between faceplate 21 and base plate 22, either it could be the connection between one faceplate and one base plate as shown in the embodiment of Fig. 10, or it could be the connection between one faceplate and several base plate as shown in the embodiment of Fig. 12 and 13.

The above mentioned heat collecting tube plate 1 includes heat collecting tubes only and both heat collecting tube and plate, collecting tubes could be either mono-tube or multi-tube; it could be either connected or not between multi-tubes; the mentioned heat collecting tube plate plane includes the plane of above mentioned heat collecting plate and plane contained the surface where heat collecting tube touches with the base plate of fin plates 2; the heat transform recycle after heat collection of heat collecting tube plate could either use recycle fluid to transform heat or use gravity style heat pipe agents to transform heat; the above mentioned transparent glass tube 3 includes single wall transparent glass tube or double wall transparent glass tube like vacuum tube; transparent glass tube 3 could be through-type, with both ends sealed with seal cover 4, or could be single-pass with one end sealed with the seal cover 4; transparent glass tube 3 is installed inside heat collecting tube plate 1 and fin plate 2, and it could be vacuum or filled with inert gas.

Fig. 2 shows a schematic view of the partial structure of the preferred embodiment. Among it, the distribution density of fin plates 2 at the vertical of heat collecting tube plate is 40 per-meter; the acute angle between fin plates 2 and heat collecting tube plane (mono- tube which is a gravity style heat pipe) is set to 25 ° , in order to adjust the acceptance angle of heat collector for the radiation of incident angle when the geographical latitude angle is 25° ; Besides, the faceplate and base plate is made as a whole, with using the sheet-metal flange shaping processing method as shown in Fig. 10, the faceplate 21 is linked to one top of base plate 22, connecting one base plate and one faceplate, and the fin plates installed horizontally on the heat collecting tube plate. Fin plates 2 are made from carbon steel, the entire front and reverse working surfaces have been treated with black chrome sun selective absorption coating, its base plate 22 is connected to the single front contact area of the heat collecting tube 1 by welding, and double wall transparent glass straight-through type vacuum tube is adopted, while solar heat collecting unit is hung vertically.

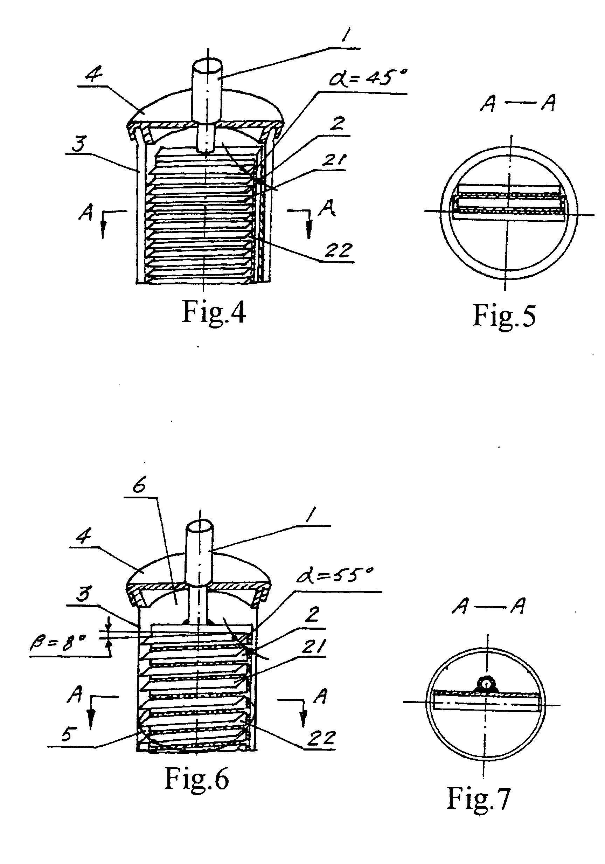

Fig. 4 shows a schematic view of partial structure of another preferred embodiment. The distribution density of fin plates 2 at the vertical of heat collecting tube plate is 1500 per-meter; the acute angle between the fin plates 2 and the plane of the heat collecting tube plate 1 is set to 45° , in order to adjust the acceptance angle of heat collecting unit for the radiation of incident angle when the geography latitude angle is 45° ; Besides, the faceplate and base plate of fin plate 2 is made as a whole, with adoption of precise casting shaping processing method as shown in Fig. 11, or could be made separately, with connection between its left and right sides through edge-wrapping after adopting the sheet-metal flange shaping processing method as shown in Fig. 12. Faceplate is linked from the middle other than the top base plate, along every meter there is a connection between one base plate and 1500 faceplates, both the fin plate 2 and the heat collecting tube plate 1 adopts copper pieces, the entire front and reverse working surfaces have been immersed and coated with resin type sun selective absorption paint, and the fixing between the fm plate 2 and the heat collecting tube plate 1, could be the symmetrical connection to both front and reverse plates of heat collecting tube plate 1 through the base plate of the former with heat conducting glue (front and reverse both sides connection), while heat collecting tube plate 1 could be made of gravity style heat pipe with flat section shape. The fin plates 2 are installed horizontally on heat collecting tube plate plane, double wall transparent glass single-pass vacuum tube is adopted, while solar heat collecting unit is hung vertically; in the event of addition of two-dimensional reflection mirror, its curved face design principle is that making reflection ray come together on a horizontal reflection line, and make sure that change of such reflection line is changed with solar height and within the range of collection fin plate area.

Fig. 6 shows a schematic view of partial structure of yet another embodiment of the invention. The embodiment of heat collecting unit includes: heat collecting tube plate 1, fin plates 2, single wall transparent glass tube 3, seal cover 4, convection block piece 5, inert gas 6. The distribution density of fin plate 2 at the vertical of heat collecting tube plate is 80 per-meter; the α acute angle between the fm plate 2 and the plane of the heat collecting tube is set as 55°, in order to adjust the acceptance angle of heat collecting unit for the radiation of incident angle when the sum of geographical latitude angle and solar latitude angle is 55° ; Besides, the faceplate and base plate is made as a whole, with adoption of sheet-metal flange shaping processing method as shown in Fig. 10, the faceplate 21 is linked from one top of base plate 22, connecting one base plate and one faceplate, and along every meter there is a connection between one base plate and 80 faceplates. Both the fin plate 2 and the heat collecting tube plate 1 adopt aluminum pieces, besides, the fixing between the fin plate 2 and the heat collecting tube plate 1 is the connection of the base plate of the former to the front of heat collecting tube plate 1(a single front side connection) through pressure processing (e.g. rolling depressing), the top, bottom and front sides, three working surfaces of the fin plate have been processed with AL-N-A1 sun selective absorption coating. And as indicated in the Fig., the fin plate 2 is installed on heat collecting tube plate plane with an anti-clockwise rotation of β (e.g. 8°) along the horizontal direction, inside the transparent glass tube 3 and on the heat collecting tube plate 1, convection block pieces 5 are inlayed, which is installed nearly vertical to the axis of transparent glass tube, convection block pieces could be either transparent like PVC slice, or non-transparent like aluminum slice; after the closing of end of transparent glass tube 3 with seal cover 4 (containing welding material of low melting point metal or high polymer sealing glue), inert gas 6 like argon and krypton gas could be filled and then sealed to reduce convection heat transfer; meanwhile, in order to reduce the humidity of gas inside the tube, desiccant like molecular sieve will be filled, transparent single wall single-pass glass tube or double-pass tube will be adopted, while solar heat collecting unit is hung vertically.

Fig. 8 shows a schematic view of partial structure of still yet another embodiment of the invention. The heat collecting tube of heat collecting tube plate 1 is formed by connecting two tubes, and the distribution density of the fin plates on the heat collecting tube plate in the vertical direction is 120 per-meter; The acute angle between the fin plates 2 and the plane of the heat collecting tube plate 1 is 62°, the incident angle of the heat collecting unit when the sum of geography latitude angle and solar latitude angle is 62° ; Besides, the faceplate and base plate of fin plates 2 is manufactured incorporated, adopting the sheet-metal flange shaping processing method showed in Fig. 13 to form the fin plate, and one base plate is coupled two faceplates, or adopting the sheet-metal flange shaping processing method showed in Fig. 14. The left part and right part are welded on center joint and the faceplate is coupled from the middle point of the base plate rather than the end part. Fin plate 2 is made of aluminum and the heat collecting tube plate 1 is made of copper. In addition, the fin plate 2 and the heat collecting tube plate 1 are coupled by coupling the fin base plate, which is processed through presswork (rolling depression) to the fin plate of the heat collecting tube plate 1. Then couple the expanding hole of the fin plate to the expanding sleeve of two heat collecting tubes 1. These two heat collecting tubes are "U" shape fluid contained heat transfer tube which is connected at the bottom of the double wall glass vacuum tube. Fin plate 2 is disposed horizontally on the heat collecting tube plate, with the front-back surface are processed by anodize oxidation stain sun selective absorption chemical plating. It adopts double wall transparent glass single-pass vacuum tube. The solar heat collecting unit is installed vertically as stated above.

The working process of the hanging transparent glass vacuum tube solar heat collecting unit application embodiment is as follows: when the sunlight and the reflected light from the reflector plate radiates through the transparent glass tube 3, it is absorbed ― reflected ― re-absorbed by the faceplate 21 and base plate 22 of fin plate 2 on the front and back working plate of the heat collecting tube plate 1. The radiation is nearly fully absorbed after several times reflection. The energy absorption ratio is approximately 1. The heat energy collected will be transmitted to the joint of base plate 22 and heat collecting tube plate 1. The working media in the heat collecting tube plate transform the solar energy into heat energy by such heat transfer cycle.

## Claims

1. A hanging transparent glass vacuum tube type solar heat collecting unit, which includes heat collecting tube plate, transparent glass tube and seal cover, **characterized in that** further comprising fin plates disposed along the axial direction of the glass tube, said fin plate comprises a base plate and a faceplate coupled thereto, which are connected to the heat collecting tube plate plane through the base plate, also, the fin plates are arranged at an angle to the heat collecting tube plate plane.

2. The hanging transparent glass vacuum tube type solar heat collecting unit as claimed in claim 1, wherein the acute angle between the fin faceplate and the heat collecting tube plate plane is within 10° ~90°.

3. The hanging transparent glass vacuum tube type solar heat collecting unit as claimed in claim 1 or 2, wherein the connection between the fin faceplate and the fin base plate is in the form of one base plate connected to one or more faceplates.

4. The hanging transparent glass vacuum tube type solar heat collecting unit as claimed in claim 3, wherein the fin base plate and the fin faceplate may be manufactured either integrally or separately.

5. The hanging transparent glass vacuum tube type solar heat collecting unit as claimed in claim 1, wherein the fin faceplate may be connected from the top/bottom end part of the base plate or other parts of the base plate except the top/bottom end part.

6. The hanging transparent glass vacuum tube type solar heat collecting unit as claimed in claim 1 or 2, wherein the distribution density of the fin plates along the heat collecting tube plate in the vertical direction is within 20~2500 per-meter.

7. The hanging transparent glass vacuum tube type solar collecting unit as claimed in claim 1 or 2, wherein the fin base plate and the heat collecting tube plate may be coupled on the single front side or the front-back double sides by welding, bonding or pressurizing.

8. The hanging transparent glass vacuum tube type solar heat collecting unit as claimed in claim 1 or 2, wherein the fin plates are preferably disposed horizontally on the heat collecting tube plate plane.

9. The hanging transparent glass vacuum tube type solar heat collecting unit as claimed in claim 1, wherein said transparent glass tubes are straight-through or one-end-pass single wall or double wall transparent glass tubes, such as vacuum tubes.

10. The hanging transparent glass vacuum tube type solar heat collecting unit as claimed in claim 1, wherein said transparent glass tubes is vacuumed or infused with inert gas, such as argon gas, krypton.

11. The hanging transparent glass vacuum tube type solar heat collecting unit as claimed in claim 1, wherein said glass tube is equipped with a convection block piece, which is made of transparent or non-transparent sheet.

12. The hanging transparent glass vacuum tube type solar heat collecting as claimed in claim 1, wherein the heat collecting tube plate comprises a heat collecting tube and a heat collecting tube plate, wherein the heat collecting tube may be a mono-tube such as gravity style heat pipe, or multi-tubes such as fluid contained heat transferring tubes; said tube can be communicated between each other.
